# FASCICULE DE BREVET EUROPEEN

(11) **EP 0 393 361 B1**
(45) Date de publication et mention de la délivrance du brevet: **14.04.1993**
(21) Numéro de dépôt: 90105074.0
(22) Date de dépôt: 17.03.1990
(51) Int. Cl.: A21D 13/08

(54) **Produit alimentaire à plusieurs composants avec barrière de protection, procédé pour son obtention et composition pour sa mise en oeuvre**
Lebensmittel aus mehreren Komponenten mit Schutzschicht, Verfahren zu seiner Herstellung und Zusammensetzung dafür
Foodstuff comprising several components with a protective layer, process and composition for its preparation

(30) Priorité: 21.04.1989 EP 89107175
(43) Date de publication de la demande: 24.10.1990
(73) Titulaire: SOCIETE DES PRODUITS NESTLE S.A., 1800 Vevey (CH)
(72) Inventeur: Berberat, Alexis, CH-1802 Corseaux (CH); Wissgott, Ulrich, CH-1814 La Tour-de-Peilz (CH)

(56) Documents cités:
- DE-A- 1 953 179
- GB-A- 947 672
- US-A- 2 586 945
- US-A- 3 042 527

## Description

L'invention concerne un produit alimentaire à plusieurs composants qui ont une activité d'eau différente et comportant entre lesdits composants une barrière de protection contre le transfert d'humidité.

L'invention concerne en outre le procédé d'obtention dudit produit et la composition pour la mise en oeuvre de ce produit.

Le brevet US 3042527 concerne un gâteau sur lequel on dépose un mélange d'oeuf, d'eau ou de lait et d'amidon de blé de manière à obtenir après cuisson une croûte gaufrée et tendre. Ce produit alimentaire est à un seul composant et ce brevet ne pose pas le problème de transfert d'humidité.

Le problème de l'altération des produits alimentaires, par transfert d'humidité entre des composants ayant une activité d'eau différente, est connu. A partir du moment où il existe entre deux composants des gradients de pression partielle d'humidité différents, la migration d'eau d'un composant à l'autre a lieu. Des solutions ont déjà été préconisées pour résoudre ce problème. La demande de brevet WO 86/00501 concerne un film comestible à barrière d'humidité basé sur la combinaison d'une couche d'un lipide adhérant à la couche précédente. Ce brevet mentionne un film déjà prêt qu'on applique sur un substrat pour faire barrière. Si on considère une utilisation pour des produits frais, une telle solution peut être envisageable. Par contre, s'agissant de produits à cuire ou à réchauffer, une telle solution n'est pas satisfaisante, car les lipides présents, lors du réchauffage, vont fondre et rompre ainsi l'effet barrière.

Le brevet US 4,031,261 concerne des boissons contenant de la graisse, prévues pour être congelées et décongelées et comportant une barrière hydrophile pour encapsuler la graisse et donner une dispersion stable. Dans le cadre de la présente invention, une barrière hydrophile n'est pas envisageable.

Le but de la présente invention est de mettre au point un produit alimentaire à plusieurs composants qui ont une teneur d'humidité différente avec entre ces composants une barrière contre le transfert d'humidité, ladite barrière hydrophobe assurant une imperméabilité dans une gamme de températures allant de la température de congélation à la température de cuisson.

La présente invention concerne un tel produit alimentaire, dans lequel la barrière de protection est formée par un mélange d'oeuf, de protéine de lait et d'eau. Pour qu'une couche formée par lesdits ingrédients fonctionne comme barrière, il faut, après l'avoir appliquée sur le composant moins humide, la soumettre à un traitement thermique de manière à ce que l'oeuf coagule. C'est à partir de ce moment-là que la couche (ou film) barrière devient hydrophobe et imperméable. Le fait d'utiliser de l'oeuf est intéressant car il est soluble dans l'eau, a des capacités filmogènes, a des propriétés de liaison, coagule à la chaleur et possède des caractères hydrophobes lorsque coagulé. Le fait de l'utiliser en combinaison avec une protéine du lait augmente la viscosité de la solution filmogène, tout en améliorant sa distribution, et renforce considérablement la structure du film. L'interaction des ingrédients lors de la coagulation thermique est responsable des propriétés fonctionnelles particulières de cette barrière.

On a constaté de manière avantageuse, que le fait de rajouter de l'amidon prégélatinisé dans la composition barrière, permet de donner au film de bonnes propriétés de liaison et d'adhérence.

Après l'activation thermique, on peut déposer le second composant sur la barrière de protection.

Par produit alimentaire, on entend aussi bien un produit prévu pour la congélation qu'un produit frais. Par produits congelés, on entend notamment des pizzas et gâteaux prévus pour la cuisson ou le réchauffage et par produits frais, notamment des gâteaux multi-couches ou des flans avec garniture. Par composant moins humide on entend une pâte, un pain, un gâteau aussi bien cuit ou précuit que frais. Par composant plus humide on entend aussi bien des garnitures salées fabriquées à partir de légumes, jambon, viandes, fromages, sauce tomate que des garnitures sucrées fabriquées à partir de divers fruits. Comme la barrière fonctionne sur une large gamme de température, il est bien entendu qu'on peut envisager tout produit alimentaire composite dans lequel on veut éviter une migration d'eau d'un composant vers l'autre. La protection du composant moins humide est assurée aussi bien durant la fabrication du produit alimentaire à température ambiante, que durant le stockage au congélateur et durant la reconstitution du produit par chauffage.

La barrière de protection contient de préférence entre 3 et 12 % d'oeuf, entre 3 et 18 % d'une protéine du lait et entre 7 et 12 % d'amidon prégélatinisé, le complément à 100 étant de l'eau. On ne descend pas sous la limite inférieure des teneurs en composés du mélange, car on aurait un film moins imperméable et avec une texture moins résistante. On ne dépasse pas la limite supérieure de ces valeurs, car on aurait un film trop épais et trop dur qui serait alors décelable par le consommateur. La composition optimale du mélange est adoptée à chaque produit, en fonction de la dureté, de la texture et de l'apparence du composant le moins humide. Elle est orientée vers une application facile et rapide, la meilleure imperméabilité et une texture résistante s'adaptant au support.

Par oeuf, on entend aussi bien du jaune d'oeuf, que du blanc d'oeuf ou de l'oeuf entier. Cet oeuf peut aussi bien être de l'oeuf frais, que de l'oeuf congelé ou de l'oeuf en poudre. Les quantités données ci-dessus sont en poids sec.

La protéine du lait est de préférence de la caséine ou un de ses sels, tels que le caséinate de calcium, de potassium ou de sodium. On utilise de préférence le caséinate de calcium. L'amidon utilisé est de l'amidon prégélatinisé, car il se dissout bien et donne un gel à température ambiante.

On peut également ajouter à la composition de la barrière tout autre ingrédient utilisable en technologie alimentaire comme des colorants et des arômes et même des lipides si le produit alimentaire envisagé n'est pas prévu pour être réchauffé.

La composition de la barrière est disposée sur la surface plane du composant le moins humide à raison de 5 à 15 g/100 cm² de substrat.

L'invention concerne également le procédé d'obtention du produit alimentaire précité, dans lequel on dispose sur le composant le moins humide le mélange pour la barrière de protection décrit ci-dessus, que l'on traite thermiquement et que l'on dispose sur ladite barrière de protection ainsi formée le second composant.

On opère de la manière suivante. On prépare une suspension avec l'oeuf, une protéine de lait et éventuellement l'amidon prégélatinisé et l'eau à la concentration souhaitée. On applique une mince couche de cette suspension à la concentration souhaitée, par exemple sur de la pâte à pain, s'il s'agit d'une pizza. Cette application peut se faire par tout moyen connu, à savoir par application manuelle (pinceau ou spatule), par pulvérisation ou par enduction. On effectue ensuite le traitement thermique à une température comprise entre 70 et 100°C pendant une durée comprise entre 15 secondes et 2 minutes. Ce traitement thermique est critique pour la formation du caractère hydrophobe et imperméable. Vu la teneur en eau du mélange des protéines et la courte durée du chauffage, la température atteint à peine 100°C. Il est impératif d'interrompre le traitement thermique avant que le brunissement de la surface apparaisse.

Une particularité de l'invention est la formation de la couche imperméable in situ sur la surface à protéger. La couche de protéines atteint sa structure solide seulement après le traitement thermique. C'est un très grand avantage par rapport à des films préfabriqués, par exemple celui faisant l'objet de la demande de brevet WO 86/00501 précitée. Le procédé selon l'invention est flexible, de telle sorte la barrière s'adapte aux multiples formes et surfaces des supports, sans besoin d'une technique d'application particulière. L'adhésion du film formé sur le support est excellente.

On peut utiliser tout type de chauffage pour activer la barrière, par exemple chauffage au four, chauffage infrarouge ou chauffage micro-ondes. Sur un plan industriel, on peut envisager un émetteur infrarouge disposé au-dessus d'une bande transporteuse amenant le composant le moins humide avec la barrière non activée sur sa surface. Cette surface est ainsi exposée à la source de chaleur. Dans ce système, la durée du chauffage de la couche superficielle peut être réglée en fonction de la vitesse d'avancement de la bande transporteuse et de l'intensité du chauffage compte tenu de la capacité de l'émetteur et de sa distance de la surface à traiter.

Après ce traitement thermique, on peut disposer le second composant plus humide sur le produit alimentaire avec barrière activée. Le produit composite est alors prêt soit pour l'emballage et la congélation, soit pour l'emballage s'il s'agit d'un produit réfrigéré.

Un problème très fréquent dans ce type de produits est que durant le réchauffage (après congélation) ou la cuisson d'une pizza au four, une quantité élevée de fluide passe dans le pain (s'agissant d'une pizza avec garniture), si ladite pizza ne comporte aucune barrière de protection. Par contre, il a été constaté que la pénétration d'eau est moindre et la qualité organoleptique nettement supérieure si la barrière décrite ci-dessus est appliquée. Il est intéressant de noter que l'imperméabilité de la couche barrière a été observée à la température ambiante, en congélation et durant la cuisson à température élevée.

La composition utilisable pour la mise en oeuvre du procédé décrit ci-dessus contient entre 25 et 75% de poudre d'oeuf et entre 25 et 75% en poids de poudre de protéine de lait. Lors de l'utilisation, il suffit de dissoudre ce mélange de poudre dans l'eau à la concentration souhaitée et de l'appliquer sur le substrat le moins humide.

De manière avantageuse, cette composition contient entre 25 et 35% de poudre d'oeuf, entre 25 et 35% de poudre de protéines de lait et entre 30 et 50% d'amidon prégélatinisé. Outre les avantages déjà mentionnés ci-dessus, l'addition d'amidon permet de baisser le prix de la composition.

La solution aqueuse de ce mélange est appliquée sur le composant le moins humide, puis solidifiée par traitement thermique. Elle forme alors une barrière insoluble et hydrophobe faisant séparation entre les composants d'un produit alimentaire.

La suite de la description est faite en référence aux exemples, dans lesquels on a étudié la pizza avec pain français (baguette), c'est-à-dire composée d'une moitié de pain sur laquelle sont posés divers ingrédients tels que jambon, fromage, légumes, sauce tomate. L'humidité moyenne du pain est de 30 % tandis que l'humidité de la garniture se situe entre 35 et 80 %. Une telle pizza fabriquée industriellement est normalement prévue pour la congélation.

### Exemple 1

On a préparé une suspension à partir de 10 g de blanc d'oeuf sec, 15 g de caséinate de calcium et 75 g d'eau. Le mélange a été étendu sur la surface coupée du pain à raison de 7 g de suspension sur 100 cm² et la couche barrière a été chauffée en moins de 60 secondes à l'aide d'un émetteur infrarouge positionné au-dessus. On a enlevé le pain avant le brunissement de la couche. Testé avec de l'eau, on a constaté le caractère hydrophobe de la surface et son imperméabilité à l'eau pendant 8 heures. Dans un second test, on a garni le pain comportant une couche de protection avec de la sauce tomate. Cette pizza a été stockée au congélateur et ensuite cuite au four à 180°C pendant 20 min. comme indiqué pour les produits commerciaux. On a observé aucune pénétration de liquide dans le pain. La structure du pain et la texture de la mie sont restées intactes. On a donc une bonne barrière thermo-résistante. Par contre, sans la couche barrière, l'eau de la sauce tomate (teneur en eau d'environ 80 %) a pénétré le pain et diminué ses qualités organoleptiques.

La couche barrière s'intègre bien dans le produit et le consommateur ne s'aperçoit absolument pas de son existence.

### Exemple 2

On a utilisé le même type de pain que pour l'exemple 1 sur lequel on applique une suspension dans l'eau de 10 % d'amidon prégélatinisé, 5 % de caséinate de calcium et 5 % de poudre de blanc d'oeuf.

On l'a soumis au même traitement thermique et on l'a recouvert de ketchup. On a laissé ensuite l'ensemble au congélateur pendant au moins 24 heures. Après stockage, on a réchauffé la pizza dans un four classique à 180°C pendant 20 minutes.

On observe une bonne protection, le pain n'est pas trempé d'eau, une couche de 7 g pour 100 cm² est suffisante, une couche de 10 g est trop épaisse et trop dure.

On a un bon film, avec une bonne apparence, dont la surface est lisse et la texture élastique et molle.

### Exemple 3

On a préparé un pain avec une couche superficielle selon la méthode décrite dans l'exemple 1. Divers ingrédients utilisés dans la fabrication des pizzas (tels que jambon, fromage, légumes, sauce tomate) sont disposés sur la surface protégée du pain. La pizza est alors emballée et stockée au congélateur à -20°C. Un nombre équivalent de pizzas de ce type a été fabriqué mais sans couche protectrice sur le pain. Ces pizzas ont été chauffées dans un four à 180°C durant 25 min pour dégustation après une durée de stockage de 1 mois, 2 mois et 8 mois.

Les dégustateurs ont constaté une qualité organoleptique nettement supérieure de la pizza avec une couche protectrice entre le pain et la garniture. Dans la pizza non équipée avec couche intermédiaire entre pain et garniture, le pain était humide et mou. La couche protectrice n'a pas été perçue par les dégustateurs, car sa couleur et sa texture s'intègrent bien sur le support. Aucune altération, ou perte d'imperméabilité n'ont été constatés suite au stockage prolongé.

### Exemple 4

Un fond de pizza rond précuit et congelé a été couvert sur sa surface supérieure avec une couche protectrice a) telle que décrit dans l'exemple 1 et b) telle que décrite dans l'exemple 2. Après activation de la barrière imperméable par le même traitement thermique, la garniture (composée de tomates, de mozzarella et d'épices) a été posée sur le fond. La pizza est alors emballée dans un sachet sous vide et stockée dans un congélateur à -25°C. Un nombre équivalent de pizzas sans couverture a été fabriqué pour servir de témoin lors des dégustations. Les pizzas ont été sorties du congélateur mensuellement et réchauffées pour une évaluation organoleptique. Les mêmes observations que celles décrites dans l'exemple 3 ont été faites.

La présente invention se propose donc de résoudre un problème qui se pose avec beaucoup d'acuité, car il rend attrayant pour le consommateur un produit composite dans lequel chaque composant n'a aucune influence sur l'autre, quant à son intégrité. On améliore ainsi la qualité des produits alimentaires à plusieurs composants grâce à une barrière de protection activée thermiquement.

## Revendications

1. Produit alimentaire à plusieurs composants qui ont une activité d'eau différente et comportant entre lesdits composants une barrière de protection contre le transfert d'humidité caractérisé en ce que la barrière de protection est hydrophobe et contient entre 3 et 12 % d'oeuf, entre 3 et 18 % de protéine de lait, le complément étant l'eau.

2. Produit alimentaire selon la revendication 1, caractérisé en ce que la barrière de protection contient en outre de l'amidon prégélatinisé.

3. Produit alimentaire selon la revendication 2, caractérisé en ce que la barrière de protection contient entre 7 et 12 % d'amidon prégélatinisé.

4. Produit alimentaire selon l'une des revendications 1 à 3, caractérisé en ce que l'oeuf est du blanc d'oeuf, la protéine de lait du caséinate de calcium, de potassium ou de sodium.

5. Produit alimentaire selon l'une des revendications 1 à 4, caractérisé en ce que la barrière de protection est disposée sur l'un des composants à raison de 5 à 15 g/100 cm².

6. Procédé d'obtention du produit alimentaire selon l'une des revendications 1 à 5, caractérisé en ce qu'on dispose sur le composant le moins humide le mélange pour la barrière de protection, qu'on traite thermiquement et on dispose sur ladite barrière ainsi formée le second composant.

7. Procédé selon la revendication 6, caractérisé en ce que le traitement thermique est réalisé à l'aide d'un émetteur infrarouge.

8. Procédé selon l'une des revendications 6 ou 7, caractérisé en ce que le traitement thermique se fait à une température comprise entre 70 et 100°C pendant une durée comprise entre 15 secondes et 2 minutes.

## Patentansprüche

1. Nahrungsmittel, das aus mehreren Bestandteilen mit unterschiedlichen Wasseraktivitäten besteht und zwischen diesen Bestandteilen eine Sperrschicht zum Schutz gegen die Übertragung von Feuchtigkeit aufweist, dadurch gekennzeichnet, daß die Sperrschicht hydrophob ist und 3 bis 12% Ei und 3 bis 18% Milchprotein enthält, wobei mit Wasser ergänzt wird.

2. Nahrungsmittel nach Anspruch 1, dadurch gekennzeichnet, daß die Sperrschicht außerdem vorgelierte Stärke enthält.

3. Nahrungsmittel nach Anspruch 2, dadurch gekennzeichnet, daß die Sperrschicht 7 bis 12% vorgelierte Stärke enthält.

4. Nahrungsmittel nach einem der Ansprüche 1 bis 3, dadurch gekennzeichnet, daß das Ei Eiweiß und das Milchprotein Kalzium-, Kalium- oder Natriumkaseinat ist.

5. Nahrungsmittel nach einem der Ansprüche 1 bis 4, dadurch gekennzeichnet, daß die Sperrschicht auf einen der Bestandteile in einer Menge von 5 bis 15 g/100cm² aufgebracht ist.

6. Verfahren zur Herstellung eines Nahrungsmittels nach einem der Ansprüche 1 bis 5, dadurch gekennzeichnet, daß auf den weniger feuchten Bestandteil die Mischung für die Sperrschicht aufgetragen wird, thermisch behandelt wird und auf die auf diese Weise gebildete Sperrschicht der zweite Bestandteil aufgebracht wird.

7. Verfahren nach Anspruch 6, dadurch gekennzeichnet, daß die thermische Behandlung mit einem Infrarotsender durchgeführt wird.

8. Verfahren nach einem der Ansprüche 6 oder 7, dadurch gekennzeichnet, daß die thermische Behandlung bei einer Temperatur von 70 bis 100°C in einer Zeit von 15 sec bis 2 min vorgenommen wird.

## Claims

1. A multi-component food product in which the individual components differ from one another in their water activity and which comprises a protective barrier against the transfer of moisture between the components, characterized in that the protective barrier is hydrophobic and contains 3 to 12% egg and 3 to 18% milk protein, the balance being water.

2. A food product as claimed in claim 1, charaterized in that the protective barrier additionally contains pregelatinized starch.

3. A food product as claimed in claim 2, characterized in that the protective barrier additionally contains 7 to 12% pregelatinized starch.

4. A food product as claimed in any of claims 1 to 3, characterized in that the egg is egg white and the milk protein is calcium, potassium or sodium caseinate.

5. A food product as claimed in any of claims 1 to 4, characterized in that the protective barrier is applied to one of the components in a quantity of 5 to 15 g/100 cm².

6. A process for producing the food product claimed in any of claims 1 to 5, characterized in that the mixture for the protective barrier is applied to the least moist component and heat-treated and the second component is placed on the barrier thus formed.

7. A process as claimed in claim 6, characterized in that the heat treatment is applied by an infrared emitter.

8. A process as claimed in claim 6 or 7, characterized in that the heat treatment is carried out for 15 seconds to 2 minutes at a temperature in the range from 70 to 100°C.
